# EUROPEAN PATENT APPLICATION

(11) **EP 4 485 221 A1**
(43) Date of publication of application: **01.01.2025**
(21) Application number: 23182001.0
(22) Date of filing: 28.06.2023
(51) Int. Cl.: G06F 16/21

(54) **TENANT-AWARE QUERY WARMUP IN CLOUD APPLICATION PROGRAMMING MODEL**

(71) Applicant: SAP SE, 69190 Walldorf (DE)
(72) Inventor: KLEMENZ, Oliver, 69190 Walldorf (DE)
(74) Representative: Müller-Boré & Partner Patentanwälte PartG mbB

(57) **Abstract**

Database performance can suffer due to invalidation of query execution plans that takes place as part of an upgrade. Database queries can be recorded and replayed after invalidation of the query execution plans. Replaying the recorded queries after invalidation results in generation of a new query execution plan that can then be used when the query is executed again, resulting in improved performance from a user perspective. Other features, including multi-tenant support can be implemented.

## Description

### FIELD

The field generally relates to database query optimization.

### BACKGROUND

Today's software can provide a rich variety of functionality to those who wish to have better visibility of their data across the enterprise. At the core of such software lie databases and associated queries. An electronic database can organize large amounts of data and provide answers on an almost instant basis, vastly outpacing conventional manual systems.

However, even in the world of electronic databases, there are still varying levels of performance. For example, one database system may perform significantly better than another one. The reasons for such performance advantages can lie in the technical features underlying the database management system. From a user perspective, slowness in a database is unacceptable because expectations for instant answers are high. Thus, there still remains room for performance improvement in the world of electronic databases.

### BRIEF DESCRIPTION OF THE DRAWINGS

FIG. 1 is a block diagram of an example system implementing query warmup.
FIG. 2 is a flowchart of an example method of implementing query warmup.
FIG. 3 is a block diagram of an example system implementing a database query recording environment.
FIG. 4 is a flowchart of an example method of recording database queries raised during execution of an executable query-containing application artifact.
FIG. 5 is a block diagram of example cloud-based application development data containing executable query-containing application artifacts.
FIG. 6 is a flowchart of an example method of recording database queries raised during execution of OData queries of an application.
FIG. 7 is a flowchart of an example method of recording database queries raised during a test scenario.
FIG. 8 is a flowchart of an example method of replaying database queries that were recorded earlier.
FIG. 9 is a block diagram of an example computing system in which described embodiments can be implemented.
FIG. 10 is a block diagram of an example cloud computing environment that can be used in conjunction with the technologies described herein.

### DETAILED DESCRIPTION

### Example 1 - Overview

Database queries can consume considerable computing resources. For example, some database queries involve selecting certain records and then pairing them to other records, according to relationships between the records in a so-called "relational database" scenario. Such scenarios can involve database tables with thousands, millions, or more records. In practice, a relational database management system (RDBMS) does not simply execute a given query against the database without some preparation. Doing so could result in very poor performance. Instead, when a query is submitted, the database management system generates a query execution plan that will find the answer to the query, but at a reduced cost in computing power. Such a process is sometimes called "query optimization." Even though the optimal query need not be found, significant improvement can be found for many queries.

Creating the query execution plan thus speeds execution of the query and only needs to be generated once for several query executions that follow; however, creation of the plan comes with a cost. In fact, generating a query execution plan can be quite expensive in terms of computing resources.

An issue arises when query execution plans are invalidated. An upgrade to the RDBMS may invalidate a plurality of query execution plans. For example, the upgrade may alter a database schema, or change a database object. After an upgrade that alters the database schema, query execution plans may be invalidated, e.g., the query execution plan cache may be invalidated. As such, the query execution plans in the cache are no longer available to help speed up query processing. Thus, when the system processes the query for the first time, it incurs the expensive overhead of generating a query execution plan that works in new database schema.

As a result, from a user perspective, queries can appear to be very slow after a database upgrade. For example, query execution runtime can increase to more than 500%-2000% because multiple execution plans need to be recalculated in situations where process steps can involve multiple sequential read and write queries (e.g., in an object activation scenario).

For example, in an Advanced Financial Closing (AFC), the operation of activating a Task-List normally takes around two seconds in an up-and-running system. If a database deployment has just been performed (e.g., appropriate query execution plans are not in the cache), such activation can take anywhere from about 30-60 seconds.

In a world where upgrade cycles continue to shrink, a continuous upgrade phenomenon emerges. Database deployments can occur not only once per week, but at an increased frequency, leading to daily upgrade deployment for multi-tenant cloud applications. Thus, accommodating upgrades without impacting performance becomes important.

In multi-tenant implementations where query execution plans are not shared across tenants, the situation can be even worse for an upgrade that affects multiple tenants. Each tenant faces the slow down, leading to poor performance across tenants and complaints from users, who are not interested in the details about why the system is slow.

Because performance decreases after an upgrade can be very frustrating for users, any improvement to performance can be quite beneficial. The user expects uniform and consistent performance situations throughout the lifecycle of the application, whatever might be going on internally to the database.

As described herein, a plurality of database queries anticipated to be run on a relational database management system may be recorded. Such database queries may be referred to as warmup database queries. Warmup database queries can be recorded by executing artifacts of an application and recording database queries raised during execution. As described herein, such queries are anticipated to be run on the relational database management system when the application is executing. Subsequently, after the upgrade, the warmup database queries can be replayed. Replaying the warmup database queries results in generation of a new set of query execution plans that can then be used going forward to increase performance vis-à-vis an approach where the system waits to generate query execution plans responsive to actual user queries.

Rollback can be employed to avoid undesirable alterations to the production database as a side effect of warmup. For example, the plurality of database queries may be part of a transaction and may be rolled back when the transaction is rolled back. The transaction may be rolled back without committing the transaction.

Multi-tenant environments can be supported. For example, in an implementation where tenants have their own tenant-specific schema, the warmup database queries can be run separately for the tenants (e.g., replay of the warmup database queries can be iterated across tenants). Parameterized queries can be used as described herein (e.g., to avoid issues with tenant-specific data values).

Other techniques such as using a fake user during query recording can be used as described herein. For example, the RDBMS may include access control (e.g., discretionary or mandatory), such that access to database objects (e.g., tables, rows, columns, views, indexes, procedures, sequences) may be restricted to specified users via permissions. Execution of queries may require access to database objects having permissions. This problem can be overcome by using the fake user during query recording.

The described technologies thus offer considerable improvements over conventional relational database management systems. Disclosed subject matter may be directed to improving the performance of an RDBMS, e.g., after an upgrade or a tenant upgrade. Specifically, disclosed subject matter may be directed to improving query performance after an upgrade of the RDBMS.

### Example 2 - Example System Implementing Query Warmup

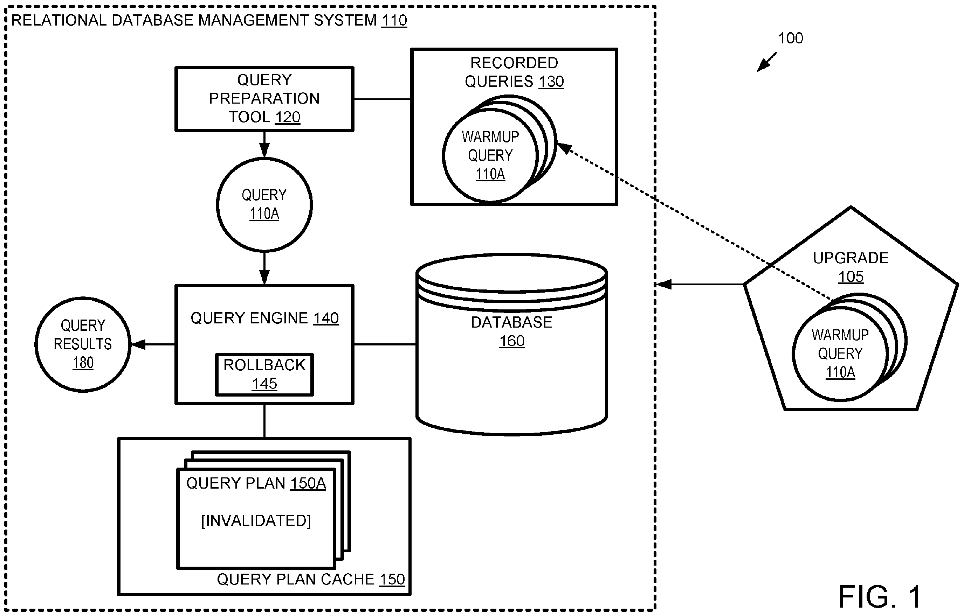

FIG. 1 is a block diagram of an example system 100 implementing query warmup that can be used to implement any of the examples herein. In the example, the system 100 includes a relational database management system ("RDBMS") 110 and an associated upgrade 105, which can be a stored internal representation of a relational database management system application upgrade. As shown, the upgrade 105 can comprise one or more warmup database queries 110A that can be obtained by recording as described herein; such warmup database queries can be part of the configuration information of the upgrade 105. As described herein, processing the upgrade 105 can result in invalidation of a query execution plan 150A in the query execution plan cache 150.

A query preparation tool 120 is configured to execute the warmup database queries and rollback the warmup database queries. Such a tool 120 in the relational database management system 110 can read recorded queries 130, which can include the warmup database query 110A and send the query 110A for execution by a query engine 140, which runs the query against the database 160. In practice, part of query processing can involve creating a query execution plan 150A that improves performance of the query. So that such plans can be reused for future executions of the query, the plan 150A can be stored in a query execution plan cache 150. Thus, executing the one or more warmup database queries generates at least one query execution plan 150A in the query execution plan cache. In practice, other caches can be involved as well, and the query 110A thus serves as a warmup database query because one or more caches are prepopulated so that subsequent executions of the query can avoid the computing overhead of generating information for the cache or filling the cache.

As described herein, the query preparation tool 120 can be configured to execute the warmup database queries under a fake user identifier. The tool 120 can execute the warmup database queries in an active phase outside of a downtime window, thus reducing downtime to the end user, even though the warmup database queries are executed as a result of an upgrade that involves downtime.

Some queries may cause changes to the database 160 (e.g., values are changed, added, removed, or the like). Given the warmup nature of the query 110A, such changes typically are not desirable, so rollback functionality 145 can be invoked to rollback the query 110A without committing such changes to the database 160.

As described herein, the warmup database queries 110A can be recorded from execution of an executable query-containing application artifact for a relational database management system application. For example, although not shown in FIG. 1, a record tool can be configured to record the warmup database queries, wherein the warmup database queries are raised during execution of the executable query-containing application artifact.

Any of the systems herein, including the system 100, can comprise at least one hardware processor and at least one memory coupled to the at least one hardware processor.

The system 100 can also comprise one or more non-transitory computer-readable media having stored therein computer-executable instructions that, when executed by the computing system, cause the computing system to perform any of the methods described herein.

In practice, the systems shown herein, such as system 100, can vary in complexity, with additional functionality, more complex components, and the like. For example, the upgrade 105 can include additional configuration data, logic, and the like. There can be additional functionality within the query preparation tool 120. Additional components can be included to implement security, redundancy, load balancing, report design, and the like.

The described computing systems can be networked via wired or wireless network connections, including the Internet. Alternatively, systems can be connected through an intranet connection (e.g., in a corporate environment, government environment, or the like).

The system 100 and any of the other systems described herein can be implemented in conjunction with any of the hardware components described herein, such as the computing systems described below (e.g., processing units, memory, and the like). In any of the examples herein, the warmup database query 110A, query execution plan cache 150, and the like can be stored in one or more computer-readable storage media or computer-readable storage devices. The technologies described herein can be generic to the specifics of operating systems or hardware and can be applied in any variety of environments to take advantage of the described features.

### Example 3 - Example Method Implementing Query Warmup

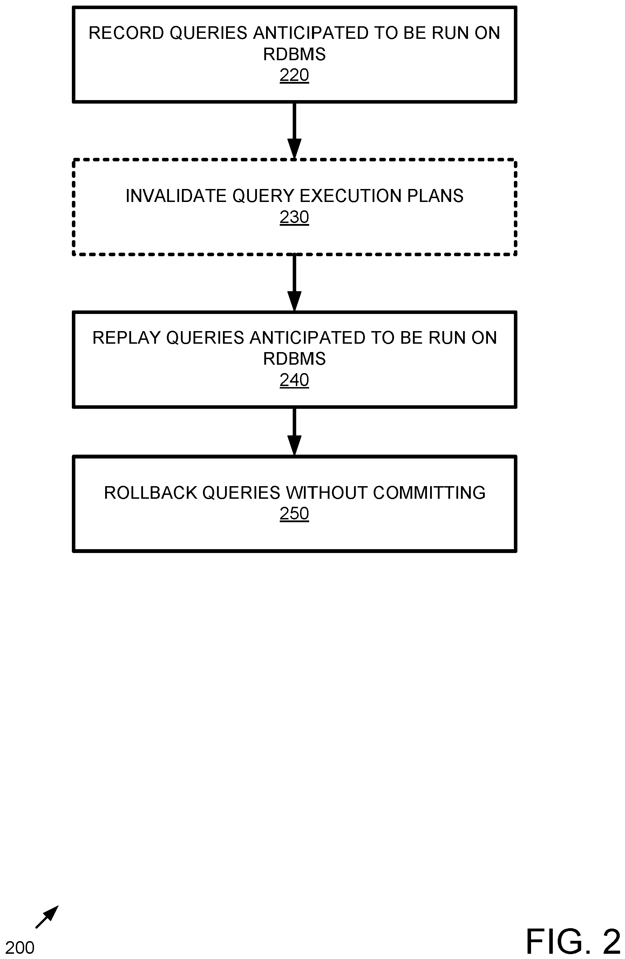

FIG. 2 is a flowchart of an example method 200 of implementing query warmup and can be performed, for example, by the system of FIG. 1. The automated nature of the method 200 can be used in a variety of situations such as preparing a database for receiving queries or post-upgrade performance preparation of an application.

In the example, at 220, queries that are anticipated to be run on a relational database management system are recorded. As described herein, queries anticipated to be raised by an application, scenario, unit, or user interface can be recorded in a variety of ways. Such queries can be included as part of configuration information related to the upgrade (e.g., shipped with the upgrade, stored with the upgrade project in the cloud, or the like).

At 230, query execution plans of the relational database management system are invalidated. For example, a former query execution plan for at least one of the database queries can be invalided during an upgrade to the relational database management system (e.g., an application supported by the RDBMS or the like). In practice, such invalidation can be performed due to a change in database schema or other modifications related to an upgrade of an application or the database system itself.

At 240, the queries anticipated to be run on the relational database management system are replayed (e.g., after the upgrade to the relational database management system that invalided the query execution plans). As described herein, replaying involves executing the query, which in turn typically involves generating a query execution plan for at least one of the database queries. In multi-tenant implementations, each tenant may have its own database schema and query execution plan cache. Hence, in view of the different database schemas, the query execution plans for each tenant may differ. Thus, replaying and rolling back can be iterated over a plurality of the tenants (e.g., in a cloud-based environment hosting the relational database management system).

Although a focus is sometimes placed on query execution plan cache, replaying can involve preparing other caches for subsequent execution of the database query as well, as described herein.

In cases of queries having an impact on the database (e.g., changes to the database data), such changes are typically unacceptable as part of a warmup scenario. Thus, the queries are rolled back at 250 without committing. Queries that have no impact on the data (e.g., read only), need not be rolled back. In practice, a transaction can be started and a plurality of warmup database queries run as part of the transaction. Rolling back the transaction rolls back the queries.

Further features can be implemented to support a multi-tenant implementation. Before the queries are replayed, the recorded queries can be converted to tenant-agnostic form, which can comprise removing tenant-specific data from the recorded queries. For example, the warmup database queries can be parameterized. In such an implementation, at least one of the queries is a parameterized query, and replaying comprises using tenant-agnostic parameters (e.g., placeholders) for the parameterized query.

Recording can be achieved in a variety of ways as described herein. For example, recording the queries can comprise executing an executable query-containing application artifact and recording the raised database queries raised during execution of the executable query-containing application artifact. Such query-containing application artifacts can comprise an HTTP-based user interface support query (e.g., such as an OData query associated with a user interface, JSON-based query, or a query as part of a RESTful implementation that presents a user interface).

Other executable query-containing application artifacts can comprise an executable test action sequence comprising a plurality of test actions. For example, test actions testing programming correctness or application performance can be implemented. The database queries raised during execution of the test actions can be recorded. The executable test action sequence can comprise a scenario test or a unit test for an application. Such executable test action sequences can be maintained as part of a development process for an application accessing the relational database management system and tests the application.

When recording queries, executable query-containing application artifacts can be executed under a fake user identifier. Application artifacts may be development objects used to structure an application. Such application artifacts may include projects and packages. Other application artifacts may be for organizing data, such as schemas, table definitions, analytical and attribute views. Artifacts may also include procedures and server-side JavaScript code. Application artifacts may be activated and created as runtime objects.

As described herein, the recorded database queries can be incorporated as warmup queries in configuration information of an upgrade package applying the upgrade.

The method 200 and any of the other methods described herein can be performed by computer-executable instructions (e.g., causing a computing system to perform the method) stored in one or more computer-readable media (e.g., storage or other tangible media) or stored in one or more computer-readable storage devices. Such methods can be performed in software, firmware, hardware, or combinations thereof. Such methods can be performed at least in part by a computing system (e.g., one or more computing devices).

The illustrated actions can be described from alternative perspectives while still implementing the technologies. For example, receiving a query can be described as sending a query depending on perspective.

### Example 4 - Example Query Execution Plan

In any of the examples herein, a query execution plan (or simply "execution plan" or "query plan") can be generated as part of query replay. Query plans can play a large role in database performance. However, generation of the query plan can be in itself a computing-resource-intensive task. Thus, an application can exhibit poor performance the first time a query is run because the RDBMS is expending resources on the query plan generation process, which delays the actual query processing itself.

As described herein, warmup database queries can be executed to warmup the database without impacting the underlying database contents. Still, even if the query is rolled back, the query plan cache keeps the generated query plan. Subsequently, when the application generates the same query, the plan-generation overhead is skipped, and database performance is as expected (e.g., without the unexpected overhead of having to generate the query plan). Thus, by recording queries that are anticipated to be run and replaying them prior to production use of the database, the user perception of performance is improved. And, in fact, query performance for the user is improved compared to a scenario where no warmup database query is executed.

The details of query execution plans can become quite involved. The field of query optimization involves various techniques for improving the performance of queries. For example, in a complicated query involving JOINs, the order in which the JOINs are performed can affect overall execution time. On a basic level, the query optimizer parses the query and creates an internal representation of the query that is then optimized and used to generate the query plan.

In practice, to execute the query, the steps in the query plan are then executed, data is retrieved from the database, and results are provided.

Thus, query processing can broadly be divided into preparation (e.g., including query plan generation) and execution.

The query execution plan can then be stored in a cache. When a subsequent query is received that has a match in the cache, the plan can be re-used. In practice, the query need not be exactly the same (e.g., values may be different) to match a query in the cache.

Although the query execution plan cache is described in examples, other types of cache can be involved and benefit from warmup as well. For example, simple database caches, endpoint caches, OData $metadata caches, and the like can be filled based on warmup database queries. Subsequent executions of the queries can benefit from the presence of data in such caches, increasing performance.

In a multi-tenant scenario, performance can be improved across tenants as described herein.

### Example 5 - Example Multi-tenant Environment

In any of the examples herein, the technologies can be applied in a multi-tenant environment. In such an environment, tenants may have separate schemas (e.g., each customer tenant can reside in a separate database schema). Caches and/or query execution plans are typically not shared among tenants for a variety of reasons, including security and that the differing schemas of tenants may require significant modifications to a query execution plan of one tenant in order for the query execution plan to function for another tenant. Thus, warmup can proceed by iterating replay of the warmup database queries over the tenants as described herein.

Further concerns about genericizing data can be addressed by anonymizing data values such as email addresses, UUIDs specific to a tenant, and the like.

UUIDs normally act as a key, which is unique. To prevent error situations during replay of queries with UUIDs, UUIDs can be replaced by newly generated UUIDs, which by definition cannot already exist (because they are generated to be unique). Values need not be tenant-specific. In principle, the same parameters can be re-used for tenants, except for UUIDs, which are calculated for tenants uniquely.

### Example 6 - Example Downtime

In any of the examples herein, instead of continuing to keep the application in a downtime state during warmup, the application can be brought up and warmup database query replay can be performed outside of the downtime window.

In this way, the total amount of downtime can be reduced. Although there is a chance that a user might run a query before warmup, timing can be set so that the upgrade is done during a low-activity time period.

### Example 7 - Example Cloud Programming Model

In any of the examples herein, any of a variety of cloud programming models can be supported. As described herein, cloud-based application development data (e.g., a project structure) can include artifacts that can be leveraged for query warmup. For example, HTTP-based user interface support queries and executable test action sequences such as unit tests and scenario tests can be maintained as part of the programming model; such artifacts can then be used for capturing database queries during query recording.

One programming model involves Core Data Services (CDS). CDS is a modeling framework provided by SAP SE that allows developers to define and expose data models and services. CDS is a data modeling infrastructure and technology used within the SAP ecosystem to define and consume data models for various purposes, such as database access, reporting, and application development. For example, the programming model (e.g., involving CDS) can be used to create data artifacts, such as a database schema, a table, a view, a synonym, a table type, an association, a structured type, and a sequence as files (or within files) in a repository (e.g., a database). The files can then be read by applications. A plug-in corresponding to the file suffix may read the contents of an artifact in one of the files selected for activation (e.g., a table or view), interpret artifact definitions and create a corresponding database object.

CDS with Managed Transaction (MTX) extends the capabilities of CDS by providing transactional processing support. It allows developers to define and manage transactional operations, including data manipulation (create, read, update, delete) within CDS views.

With CDS MTX, developers can define CDS views that not only retrieve data but also enable data modification operations. This means developers can write CDS views that support insert, update, and delete operations, providing a unified and consistent way to perform transactional operations on underlying database tables.

The benefits of such an approach can be combined with the technologies described herein so that query warmup is automatically provided as yet another benefit.

### Example 8 - Example Executable Query-Containing Application Artifacts

In any of the examples herein, executable query-containing application artifacts can be associated with one or more applications. The artifacts can be executed to record queries raised during execution. As described herein, such queries are anticipated to be run on the relational database management system (e.g., when the application is executing).

One type of artifact is an HTTP-based user interface support query. Such queries can use URIs (e.g., URLs or the like) to achieve query functionality in an HTTP (e.g., browser) context; data from such queries can then be used to present user interfaces. Such queries can comprise a URL-based query syntax.

To facilitate application development, a cloud application development environment can recognize such queries as part of user interface development and link an HTTP-based query with a user interface (e.g., a form, field, or the like). Declarative definitions are possible, but the artifact is executable in that when the user interface is presented, the definition results in a query that is executed against a database.

In practice, such HTTP-based queries can be tailored to an HTTP-centric service (e.g., OData), but are then translated to another format (e.g., SQL) before being executed against the database. In the HTTP-centric service, it may be that everything is a resource and that every resource is identified by a unique identifier. Moreover, the HTTP-centric service may enable properties of a resource to be defined and the defined properties may be used to retrieve the resource. In addition, the HTTP-based queries may have a plurality of query options, such as filter (an expression specified with filter is evaluated for each resource in a collection, and only items where the expression evaluates to true are included in the response), $select (specify a subset of properties for each resource in a resource graph), $orderby (to request resources in a particular order), $count (to request a count of the matching resources included with the resources in the response), $top (requests the number of items in the queried collection to be included in the result), $skip (requests the number of items in the queried collection that are to be skipped and not included in the result) and $expand (specifies related resources or media streams to be included in line with retrieved resources; may also specify the extent of a resource graph to return for a select option). As described herein, recording can be achieved by running the HTTP-based query and then recording the resulting query to the database. Other HTTP-based user interface support queries can be a JSON-based query, or a query as part of a RESTful framework that presents a user interface.

The Open Data Protocol (OData) is RESTful, and any query type (e.g., OData, REST, GraphQL, or the like) that triggers SQL database statements can be used with the technologies described herein. Depending on the user interface technology, different protocols may be used. SAP UI5 tends to use OData, but others may use plain custom Rest, React may use GraphQL, or the like. Other techniques to trigger SQL queries from outside of the application can be used in a user interface context.

Another type of artifact is an executable test action sequence. As part of software testing, various testing artifacts can be generated and included as part of the application development data. For example, unit tests and scenario tests can be generated for testing application correctness and performance (e.g., benchmarking). As part of the development process, such tests are updated so that accurate testing can be performed before launch. Such tests can include database queries. As described herein, recording can be achieved by running the executable test action sequence and then recording queries raised to the database.

### Example 9 - Example Scenario Tests and Unit Tests

In any of the examples herein, a scenario test can comprise a plurality of test actions for a scenario (e.g., activating an object, performing a task, or the like). Such tests can be put into place to verify that complex or common scenarios are performing as expected and within a reasonable amount of time.

In any of the examples herein, a unit test can comprise a plurality of test actions for a software unit (e.g., a collection of functionality related to a programming unit), such as security, finance, initialization, messaging, or the like. Such tests can be put into place to verify that units are performing as expected and within a reasonable amount of time.

Such executable test action sequences can be maintained as part of a development process for an application accessing the relational database management system.

### Example 10 - Example Upgrade

In any of the examples herein, an upgrade can result in modified database objects such as tables or views. For example, tables may be added, modified, or removed (e.g., columns may be added, modified, or removed); views may be added modified, or removed, or the like.

Such an upgrade is sometimes called an upgrade to the RDBMS or a "database deployment" because the schema of the underlying database may be impacted. Thus, a new database is effectively deployed as part of the upgrade. The relational database management system may host the data supporting the application that is hosted by a system that implements a cloud application programming model that includes the RDBMS. In some cases, multiple applications are impacted.

However, from a user perspective, such an upgrade may be to the application. For example, additional or different functionality is presented by an application after the upgrade.

Whether the upgrade is called an upgrade to the relational database management system or an upgrade to the application, if it invalidates the query execution plan cache, performance will be impacted because the next execution of a query re-prepares the query execution plan (e.g., from scratch) before actually performing query execution.

As described herein, query warmup can be performed after the upgrade to ameliorate such performance issues.

In a multi-tenant implementation, an application upgrade may deploy a new database model. In such a case, tenants will be upgraded to reflect the new or altered database design time objects in the database runtime representation (e.g., tables and views.)

### Example 11 - Example Database Query Recording System

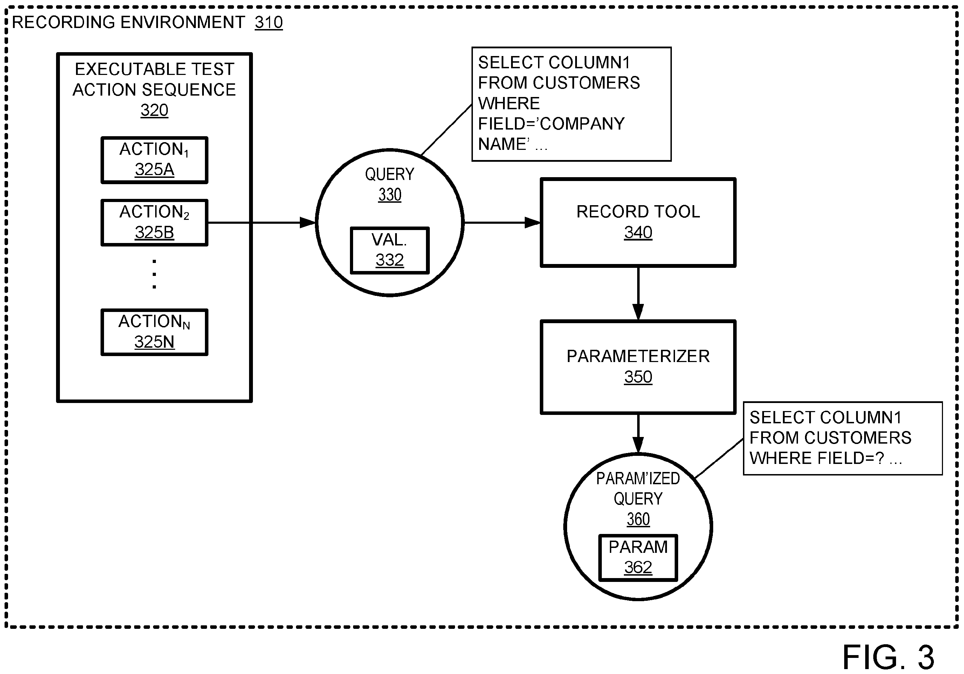

FIG. 3 is a block diagram of an example system implementing a database query recording environment 310 that can be executed within a computing system and support the system shown in FIG. 1. In the example, the environment 310 can include an executable query-containing application artifact such as an HTTP-based user interface support query or an executable test action sequence 320 comprising a plurality of test actions 325A-N as shown.

During execution of an artifact or sequence 320, a database query 330 can be raised and recorded with the record tool 340. In practice, record functionality can be activated before execution of the sequence 320, and the database query 330 used for warmup is recorded to a log. The log can then be inspected to extract any queries. The database query 330 can be of a different format than that in the artifact or sequence 320. For example, an OData query in an artifact can raise an SQL query. The format of the query 330 is typically that of the associated RDBMS against which it is run.

In multi-tenant implementations, a parameterizer 350 can convert the query 330 to a parameterized query 360 (i.e., a query in tenant-agnostic form). For example, values 332 can be removed from the query and replaced with a parameter indicator 362. For example, in SQL, values can be replaced with a question mark ('?') and thus serve as a placeholder for the value. Thus, queries can be converted to tenant-agnostic form (e.g., comprising removing tenant-specific data from the recorded queries).

Subsequently, values can be supplied for the parameters when the queries are replayed.

Values can be recorded together with the query in a development landscape. During replay of the query, the same parameters can be used, independent of the tenant. However, the parameters can be injected into the query as placeholders, so that a query abstracts from concrete values, which can allow the query warmup to be effective for other queries that the tenant may trigger (e.g., even if the values are different). Some parameters can be replaced as described herein (e.g., UUIDs), but in general, recorded static values can be used to be replaced for each tenant.

### Example 12 - Example Method of Recording Database Queries Raised During Execution of an Executable Query-Containing Application Artifact

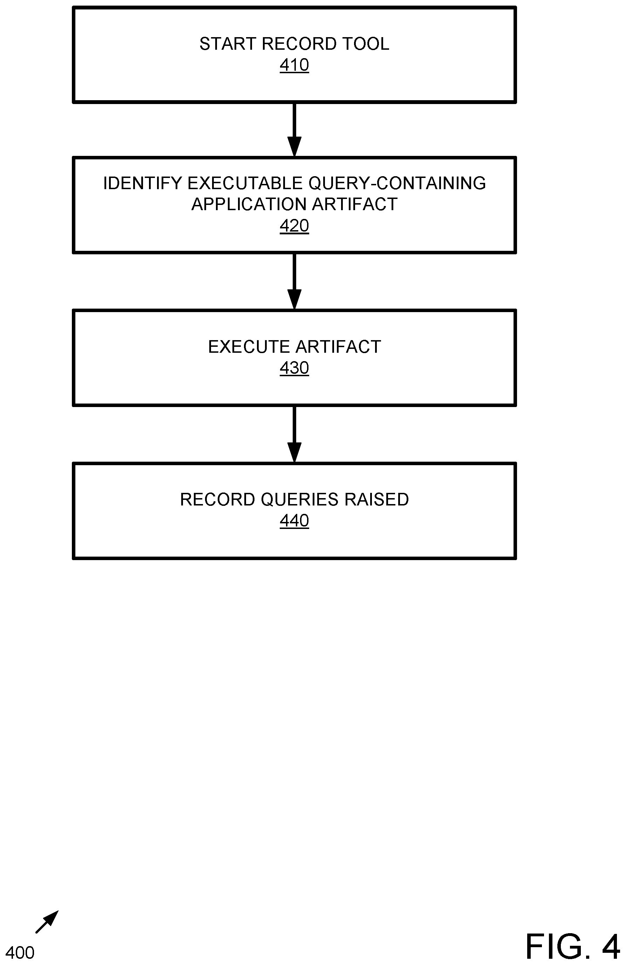

FIG. 4 is a flowchart of an example method 400 of recording database queries raised during execution of an executable query-containing application artifact and can be implemented in any of the examples herein (e.g., the system shown in FIG. 3).

At 410, a record tool is started. Various recording tools can be supported by different relational database management systems. In practice, any queries raised can be recorded, whether alone or with other data in a log.

At 420, an executable query-containing application artifact is identified. As described herein, such an artifact can comprise an HTTP-based user interface support query of the application, an executable test action sequence comprising a plurality of test actions testing program correctness or application performance of the application, or the like.

At 430, the artifact is executed. For example, for HTTP-based user interface support queries, the queries can be executed, raising database queries. For executable test action sequences, the test actions can be executed, raising database queries. Such queries are anticipated to be run on the relational database management system when the application is executed.

At 440, the raised queries are recorded. Such queries can then be retrieved from a log, parameterized, and placed in an associated upgrade (e.g., of the application) as described herein.

A fake user can be used to execute the artifact. In the case of queries making changes to the database, rollback can be implemented.

### Example 13 - Example Fake User

In any of the examples herein, a fake user can be used to achieve execution of artifacts or queries. Such an approach can avoid problems with permissions and the like. Fake users can be used during recording to ensure that the user has the privileges needed to trigger the queries, so that the relevant SQL can be recorded. Therefore, such fake users can be provisioned with the necessary permissions.

### Example 14 - Example Application with Artifacts

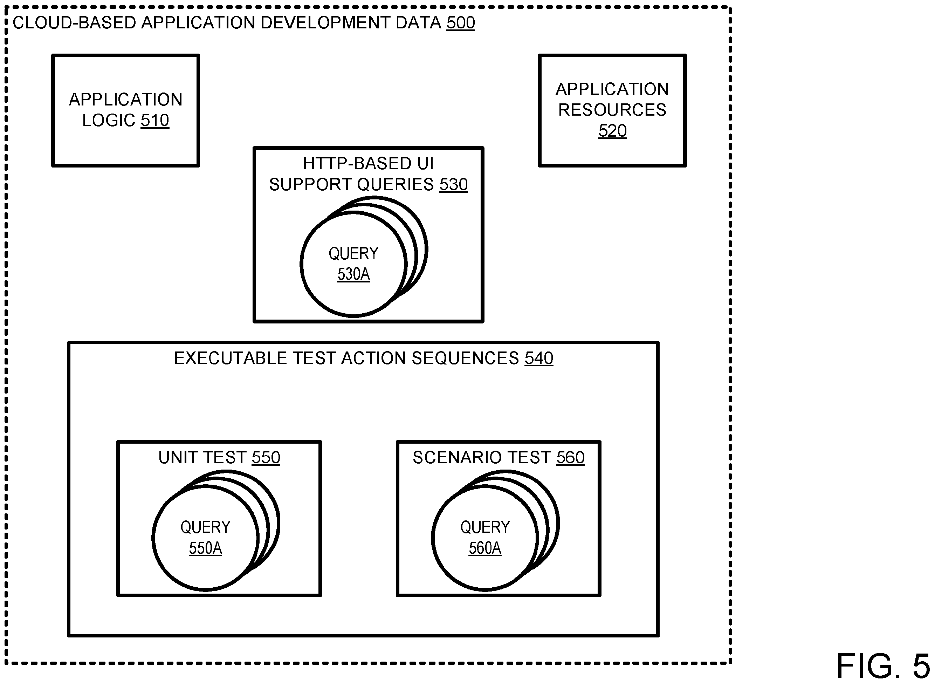

FIG. 5 is a block diagram of example cloud-based application development data 500 containing executable query-containing application artifacts. Such development data 500 can be maintained as part of a development environment as part of a cloud application programming model for database-powered applications hosted in the cloud.

The cloud may include public and/or private cloud computing infrastructure. Public cloud (computing) infrastructure may involve sharing hardware, storage and/or network resources among multiple organizations or tenants. Services and may be accessed and managed using a web browser. Private cloud (computing) infrastructure may include resources exclusively used by one organization or group of users. In comparison to public cloud computing infrastructure, private cloud infrastructure may provide more flexibility and control, however, private cloud infrastructure may be more expensive. In both cases, public and private cloud computing infrastructure may be hosted by a service provider, e.g., Microsoft (Azure) or Amazon (AWS). Edge computing or cloud enabled edge computing may refer to computing independent of cloud infrastructure, e.g., on-premises computing. Edge computing may be carried out at the edge of an on-premises computer network. More specifically, edge computing may be carried out by an edge device, such as a network access device, edge server (e.g., network gateway), router, routing switch, integrated access device, multiplexer, metropolitan area network access device, wide area network access device.

In comparison to an on-premises computing environment, the cloud may have a higher ratio of virtual resources to physical resources (e.g., a higher ratio of virtual machines to physical machines). For example, the ratio of virtual resources (e.g., machines) to physical resources may be at least 10:1, at least 20:1 or at least 30:1 in the cloud computing environment. In contrast, an on-premises computing environment may have less than four virtual resources (e.g., machines) per physical resource.

Application servers and databases may be hosted in the cloud rather than on-premises.

In addition to the application logic 510 and various other resources 520, HTTP-based user interface support queries 530 can be maintained as part of the development data 500. For example, in the case of OData queries, a declarative mechanism can be used to define such queries that retrieve data for a user interface of an application. Instead of separately writing such queries in isolation, they can be defined as part of the application development data 500 and invoked as needed (e.g., when presenting a user interface of the application). The logic linking the query to the displayed fields can be implemented transparently to the developer, leaving the developer to concentrate on the application logic 510, usability issues, and the like. As described herein, a query 530A is thus anticipated to be run on the relational database management system (e.g., when the application is executed) because it is run when the user interface is presented to a user during execution of the application. As described herein, the actual query run may differ (e.g., be of a different format). For example, an OData query can be converted to SQL, or the like.

Similarly, the executable test action sequences 540 can be maintained as part of the software testing effort. As shown, such sequences 540 can take the form of a unit test 550, a scenario test 560, or the like. Given reduced development cycles, such sequences 540 can be maintained as part of the development data 500 to facilitate and integrate testing into the overall development effort instead of attempting to find appropriate tests after the code is developed. For example, if a user interface is changed or a column is added to a database, the sequences 540 can be modified accordingly so that testing follows the current version of the application.

A unit test can test the correctness or performance of a unit of the software, whereas the scenario test can test the correctness or performance of a scenario within the application (e.g., adding an account, approving a purchase order, or the like). The sequences 540 can be maintained as part of administration (e.g., development, testing, or the like) tools.

As described herein, database queries 550A or 560A can be raised and recorded during execution of the sequences 540.

Such queries 550A or 560A are anticipated to be run on the relational database management system (e.g., when the application is executed) because they involve common functionality invoked during execution of the application (e.g., a scenario or the like), and can thus be used as warmup database queries.

### Example 15 - Example Detailed Implementation

In one implementation, the process of implementing a tenant-aware query warmup mechanism is split up into two steps using Core Data Services Development Kit (cds-dk) tools:
1. Query collection (SQL recording) by a cds-dk SQL Query Execution Record Tool.
2. Query replay with transaction rollback by a cds-dk SQL Query Execution Replay Tool.

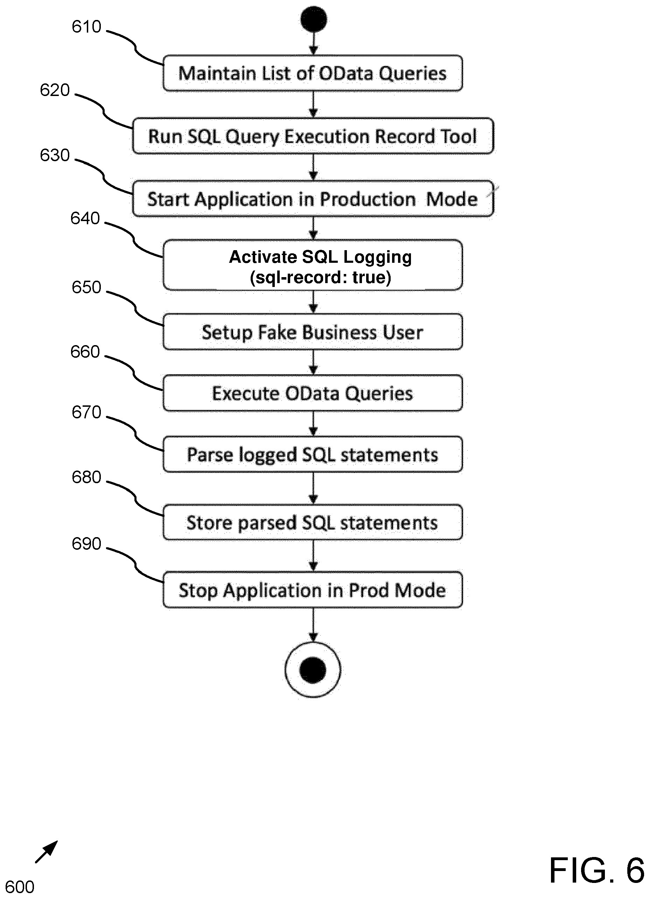

FIGS. 6, 7, and 8 show further details of such an implementation.

The SQL statements (recorded queries) are stored in a project folder structure and are put under version control so they can be used when replaying the queries in the production system.

### Example 16 - Example Method Recording Database Queries

FIG. 6 is a flowchart of an example method 600 of recording database queries raised during execution of OData queries (e.g., OData requests) of an application and can be performed, for example, by the system of FIG. 3 to achieve recording database queries for warmup. An SQL query execution record tool for OData request is available as part of the CDS development kit tools (CDS-dk) that runs the configured list of the important OData queries against the target database.

At 610, a list of OData queries is maintained as described herein (e.g., as part of application development). One can identify which queries are relevant and anticipated to be run. Ideally, such queries are the ones that an end-user would trigger when first using the system after an application upgrade. Manually identifying such queries would be error-prone and tedious, so an automatic mechanism can be introduced as part of a programming model (e.g., Cloud Application Programming Model or "CAP"). A configuration file is available that stores important OData queries that are triggered from the user interface. Prioritization can be derived from the primary usage of the user interface applications (e.g., displaying a list of data, showing an object instance, editing an instance, navigation into sub-details, and so forth). Custom actions can be included. The queries can follow the main usage paths of the application.

At 620, an SQL query execution record tool is executed. Under a read use case involving the OData Query based SQL statements that involve HTTP-based user interface support queries (OData queries), an sql-record option is available in the runtime to log executed SQL statements as part of Core Data Services (CDS) requests and query processing to the console.

As the queries are executed on the target database, to record the exact SQL that is later triggered by the end-user, the sql-record:true option can be used, when queries are executed on the target database.

At 630, the application is started in production mode. The process is targeting the production database because the actual queries anticipated to be run on the RDBMS are desired to be recorded. The application backend is started up in production mode (e.g., targeting the target database, not a local database).

At 640, SQL logging is activated by setting the sql-record:true option as an environment variable.

At 650, a fake business user is setup that has permissions to execute the queries.

At 660, the OData queries are executed. Because logging is activated, any SQL database queries raised are recorded in the log. The OData queries are executed by the cds-dk; executed SQL statements corresponding to the OData query are logged to the console.

At 670, the logged SQL statements are parsed. cds-dk parses the one or more (e.g., inline-count use case) SQL statements and correlates them to the executed OData request.

At 680, the stored parsed SQL statements are stored. Derived SQL statements are recorded in the warmup configuration file under section requests for later replay in production systems.

At 690, the application is stopped.

In practice, such queries may be read-only queries, so rollback may not be needed.

### Example 17 - Example Method of Recording Queries (Test Scenario)

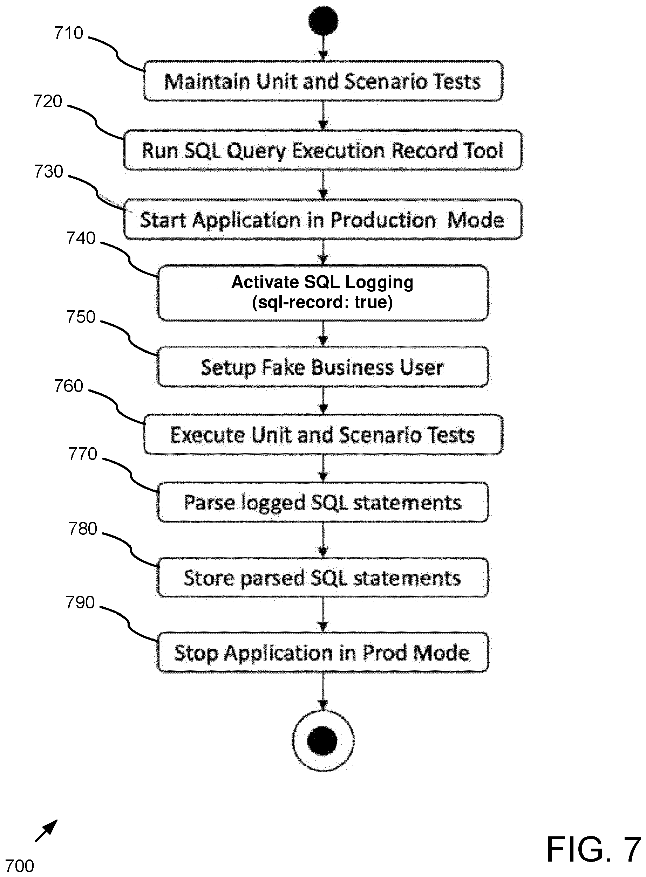

FIG. 7 is a flowchart of an example method 700 of recording database queries raised during execution of a test scenario of an application and can be performed, for example, by the system of FIG. 3 to achieve recording database queries.

Although some queries are read-only, read/write queries can also be supported. For example, queries executed as part of scenario steps such as TaskList activation can be important for improving performance after an upgrade. Such warmup database queries can be obtained by recording SQL statements executed when running unit and scenario tests on the target database. An SQL query execution record tool for scenarios is available as part of the CDS development kit tools (CDS-dk) that runs the configured scenarios against the target database.

At 710, unit and scenario tests are maintained as described herein (e.g., as part of application development).

At 720, an SQL query execution record tool is executed as described herein.

At 730, the application is started in production mode. The process is targeting production database because the actual queries anticipated to be run on the RDBMS are desired to be recorded.

At 740, SQL logging is activated by setting the sql-record:true option as an environment variable

At 750, a fake business user is setup.

At 760, the unit tests and scenario tests are executed. Because logging is activated, any SQL database queries raised during execution are recorded in the log (e.g., logged to the console).

At 770, the logged SQL statements (e.g., SELECT, UPDATE, UPSERT, MERGE, DELETE) are parsed and correlated to the executed scenario requests.

At 780, the stored parsed SQL statements are stored in the warmup configuration file under section scenario for later replay in production systems.

At 790, the application is stopped.

### Example 18 - Example Query Replay (Warmup)

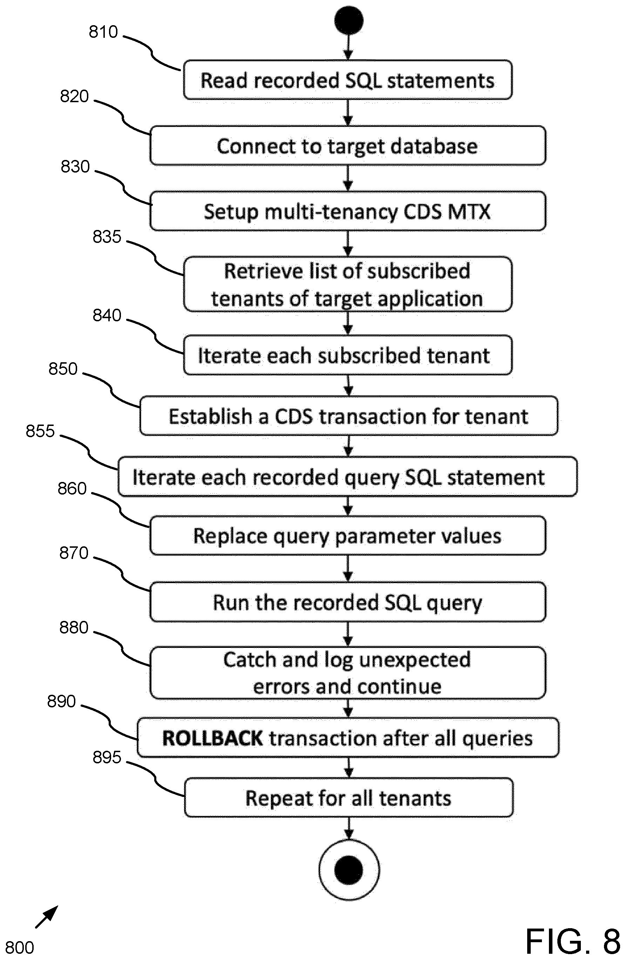

FIG. 8 is a flowchart of an example method 800 of replaying database queries that were recorded earlier that can be used in any of the examples herein. As described herein, such database queries are anticipated to be run on the relational database management system, so execution of the queries can warmup the system due to cache activity, such as generation of query execution plans.

A list of database queries anticipated to be run on the relational database management system can be collected and stored as described above. After a successful database deployment and tenant upgrade, the release pipeline triggers a task (e.g., a Cloud Foundry task), starting the SQL query statement Execution Replay Tool part of the CDS Development Kit tools (cds-dk). The task may be an app or script that runs independently in its own container for a finite amount of time. The container may be destroyed after the task is completed.

The process to replay the queries can proceed as follows: start the cds-dk Query Execution Replay Tool to trigger warmup database queries for plural tenants. The sample code provided below may be implemented via JavaScript, e.g., Node.js.

At 810, recorded SQL statements are read (e.g., requests for UI and scenario sessions).

At 820, a connection to the target database is made. For example:

```
 const cds = require("@sap/cds");
 await cds.connect.to("db")
```

At 830, core data services with managed transactions is set up. A different service can be set up that provides the information for replaying the queries and/or supports transactions that can be rolled back. For example, for core data services:

```
 const express = require("express");
 await cds.mtx.in(express());
```

At 835, the list of subscribed tenants of the target application are retrieved. For example:

```
 const Tenant = require("@sap/cds-mtx/lib/tenant");
 await Tenant.getAllWithMetadata()
```

At 840, the process iterates over the subscribed tenants. So, the process 850-890 is repeated for a given tenant.

At 850, a core data services transaction is established for the given tenant. For example:
const tx = cds.tx({ user: { tenant: tenantld } });

At 855, the process iterates over the recorded queries. So, the process 860-880 is repeated for a given query.

At 860, for a given query, the parameter values are replaced (e.g., with generic anonymized surrogates). For example, emails can be anonymized, and new UUIDs can be generated.

At 870, the given recorded SQL query is run (e.g., executed) using the established tenant transaction to the production tenant database schema. For example:
return tx.run(query, parameters);

At 880, unexpected errors are caught and logged. The process can continue to the next query, even after errors, so that as many queries are warmed up as possible.

At 890, the transaction is rolled back (e.g., =DB Rollback) so that no persistent changes are done to production tenant data as a side effect of the warmup process. The warmup tool does not perform a commit (e.g., =DB COMMIT). Rolling back the transaction has the effect of rolling back the effect of any queries executed at 870, except that caches, such as the query execution plan cache remain populated with one or more query execution plans related to execution of the queries. Rollback and COMMIT may be Advanced Business Application Programming (ABAP) keywords.

At 895, the process is repeated for another tenant.

### Example 19 - Example Implementations

Any of the following can be implemented.

Clause 1. A computer-implemented method comprising:
recording a plurality of database queries anticipated to be run on a relational database management system;
after an upgrade to the relational database management system that invalidates a plurality of query execution plans, replaying the plurality of database queries anticipated to be run on the relational database management system; and
rolling back the plurality of database queries without committing.

Clause 2. The method of Clause 1, wherein:
replaying the plurality of database queries comprises generating a query execution plan for at least one of the database queries.

Clause 3. The method of Clause 2, wherein:
a former query execution plan for at least one of the database queries was invalidated during the upgrade to the relational database management system.

Clause 4. The method of any one of Clauses 1-3, further comprising:
iterating the replaying and rolling back over a plurality of tenants of a cloud-based environment hosting the relational database management system.

Clause 5. The method of Clause 4, wherein:
at least one query of the queries is a parameterized query; and
replaying the at least one query comprises using tenant-agnostic parameters for the parameterized query.

Clause 6. The method of any one of Clauses 1-5, wherein:
recording the plurality of database queries comprises:
executing an executable query-containing application artifact; and
recording raised database queries raised during execution of the executable query-containing application artifact.

Clause 7. The method of Clause 6, wherein:
the executable query-containing application artifact comprises an HTTP-based user interface support query.

Clause 8. The method of any one of Clauses 6-7, wherein:
recording the plurality of database queries comprises:
executing the executable query-containing application artifact under a fake user identifier.

Clause 9. The method of any one of Clauses 6-8, wherein:
the executable query-containing application artifact comprises an executable test action sequence comprising a plurality of test actions testing program correctness or application performance; and
recording the database queries comprises recording the database queries raised during execution of the test actions.

Clause 10. The method of Clause 9, wherein:
the executable test action sequence comprises a scenario test or a unit test for an application.

Clause 11. The method of any one of Clauses 9-10, wherein:
the executable test action sequence is maintained as part of a development process for an application accessing the relational database management system and tests the application.

Clause 12. The method of any one of Clauses 1-11, further comprising:
incorporating the database queries as configuration information into an upgrade package applying the upgrade.

Clause 13. The method of any one of Clauses 1-12, further comprising:
before replaying the database queries, converting the recorded database queries to tenant-agnostic form, wherein converting the recorded database queries to tenant-agnostic form comprises removing tenant-specific data from the recorded database queries.

Clause 14. A computing system comprising:
at least one hardware processor;
at least one memory coupled to the at least one hardware processor;
a relational database management system comprising a plurality of stored database tables and a query execution plan cache;
a stored internal representation of a relational database management system application upgrade of an application, wherein the stored internal representation comprises configuration information comprising one or more warmup database queries;
a query preparation tool configured to execute the one or more warmup database queries and rollback the one or more warmup database queries, wherein executing the one or more warmup database queries generates at least one query execution plan in the query execution plan cache.

Clause 15. The computing system of Clause 14, wherein:
the query preparation tool is configured to execute the warmup database queries under a fake user identifier.

Clause 16. The computing system of any one of Clauses 14-15, wherein:
the warmup database queries are recorded from execution of executable test action sequences for the application.

Clause 17. The computing system of any one of Clauses 14-16, wherein the computing system further comprises:
a record tool configured to record the warmup database queries, wherein the warmup database queries are raised during execution of a unit test or a scenario test.

Clause 18. The computing system of any one of Clauses 14-17, wherein:
the query preparation tool executes the warmup database queries in an active phase outside of a downtime window.

Clause 19. The computing system of any one of Clauses 14-18, wherein:
the query preparation tool iterates over a plurality of tenants for which the application is active.

Clause 20. One or more non-transitory computer-readable media comprising computer-executable instructions that, when executed by a computing system, cause the computing system to perform operations comprising:
executing OData queries supporting user interfaces of an application;
recording SQL database queries resulting from execution of the OData queries;
executing scenario tests for the application;
recording SQL database queries resulting from execution of the scenario tests; and
after invalidation of query execution plan cache of a relational database management system, replaying the recorded SQL database queries from execution of the OData queries and the recorded SQL database queries from execution of the scenario tests;
wherein replaying the recorded SQL database queries from execution of the OData queries and the recorded SQL database queries from execution of the scenario tests adds at least one query execution plan to the query execution plan cache.

### Example 20 - Example Advantages

A number of advantages can be achieved via the technologies described herein. For example, consistent and uniform performance for users of a multi-tenant-aware cloud application (e.g., software-as-a-service or SaaS application) based on a cloud programming model can be provided.

Regardless of when the users use the solution, the performance meets their expectations. Especially after a database upgrade, the query performance (e.g., end-to-end response time, turnaround time, or the like) does not decrease from the user's perspective.

Customers are more satisfied with the software, thus preventing escalations when performance is not as expected. Otherwise, needless trouble tickets may be raised, when in reality, the system was merely generating query execution plans due to invalidation from the upgrade.

Consistent performance can be achieved by the described tenant-aware query warmup technologies that can leverage information in the programming model to warmup anticipated queries after an upgrade. As such, query execution plans are already ready, and the database can focus on query execution and not preparation as part of answering a user request.

Relevant major query statements can be automatically collected as part of the runtime (e.g., during UI requests via OData, scenario executions such as unit tests or scenario tests) execution.

After deployment, a process (e.g., an after-deployment step in a Cloud Foundry task system), can replay the collected database queries as warmup database queries without performing a commit (e.g., via rollback) on the database. Such an approach leads to triggering the query execution preparation phase, without making any changes to the tenant data, which avoids undesirable changes to production data as a side effect of the warmup.

Finally, the amount of maintenance for the technologies is reduced because it can leverage the presence of executable query-containing application artifacts already part of application development data (e.g., project structure), such as HTTP-based user interface support queries, executable test action sequences, and the like.

### Example 21 - Example Computing Systems

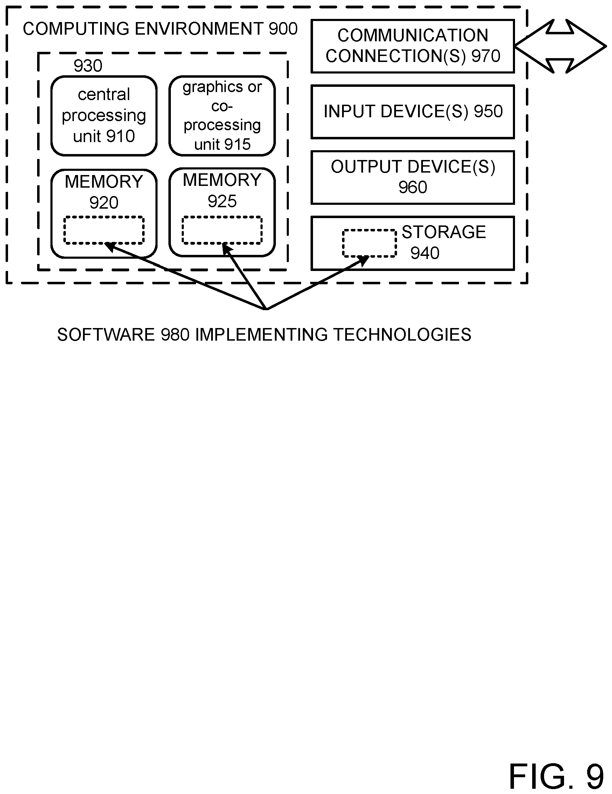

FIG. 9 depicts an example of a suitable computing system 900 in which the described innovations can be implemented. The computing system 900 is not intended to suggest any limitation as to scope of use or functionality of the present disclosure, as the innovations can be implemented in diverse computing systems.

With reference to FIG. 9, the computing system 900 includes one or more processing units 910, 915 and memory 920, 925. In FIG. 9, this basic configuration 930 is included within a dashed line. The processing units 910, 915 execute computer-executable instructions, such as for implementing the features described in the examples herein. A processing unit can be a general-purpose central processing unit (CPU), processor in an application-specific integrated circuit (ASIC), or any other type of processor. In a multi-processing system, multiple processing units execute computer-executable instructions to increase processing power. For example, FIG. 9 shows a central processing unit 910 as well as a graphics processing unit or co-processing unit 915. The tangible memory 920, 925 can be volatile memory (e.g., registers, cache, RAM), non-volatile memory (e.g., ROM, EEPROM, flash memory, etc.), or some combination of the two, accessible by the processing unit(s) 910, 915. The memory 920, 925 stores software 980 implementing one or more innovations described herein, in the form of computer-executable instructions suitable for execution by the processing unit(s) 910, 915.

A computing system 900 can have additional features. For example, the computing system 900 includes storage 940, one or more input devices 950, one or more output devices 960, and one or more communication connections 970, including input devices, output devices, and communication connections for interacting with a user. An interconnection mechanism (not shown) such as a bus, controller, or network interconnects the components of the computing system 900. Typically, operating system software (not shown) provides an operating environment for other software executing in the computing system 900, and coordinates activities of the components of the computing system 900.

The tangible storage 940 can be removable or non-removable, and includes magnetic disks, magnetic tapes or cassettes, CD-ROMs, DVDs, or any other medium which can be used to store information in a non-transitory way and which can be accessed within the computing system 900. The storage 940 stores instructions for the software 980 implementing one or more innovations described herein.

The input device(s) 950 can be an input device such as a keyboard, mouse, pen, or trackball, a voice input device, a scanning device, touch device (e.g., touchpad, display, or the like) or another device that provides input to the computing system 900. The output device(s) 960 can be a display, printer, speaker, CD-writer, or another device that provides output from the computing system 900.

The communication connection(s) 970 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the context of computer-executable instructions, such as those included in program modules, being executed in a computing system on a target real or virtual processor (e.g., which is ultimately executed on one or more hardware processors). Generally, program modules or components include routines, programs, libraries, objects, classes, components, data structures, etc. that perform particular tasks or implement particular abstract data types. The functionality of the program modules can be combined or split between program modules as desired in various embodiments. Computer-executable instructions for program modules can be executed within a local or distributed computing system.

For the sake of presentation, the detailed description uses terms like "determine" and "use" to describe computer operations in a computing system. These terms are high-level descriptions for operations performed by a computer and should not be confused with acts performed by a human being. The actual computer operations corresponding to these terms vary depending on implementation.

### Example 22 - Computer-Readable Media

Any of the computer-readable media herein can be non-transitory (e.g., volatile memory such as DRAM or SRAM, nonvolatile memory such as magnetic storage, optical storage, or the like) and/or tangible. Any of the storing actions described herein can be implemented by storing in one or more computer-readable media (e.g., computer-readable storage media or other tangible media). Any of the things (e.g., data created and used during implementation) described as stored can be stored in one or more computer-readable media (e.g., computer-readable storage media or other tangible media). Computer-readable media can be limited to implementations not consisting of a signal.

Any of the methods described herein can be implemented by computer-executable instructions in (e.g., stored on, encoded on, or the like) one or more computer-readable media (e.g., computer-readable storage media or other tangible media) or one or more computer-readable storage devices (e.g., memory, magnetic storage, optical storage, or the like). Such instructions can cause a computing system to perform the method. The technologies described herein can be implemented in a variety of programming languages.

### Example 23 - Example Cloud Computing Environment

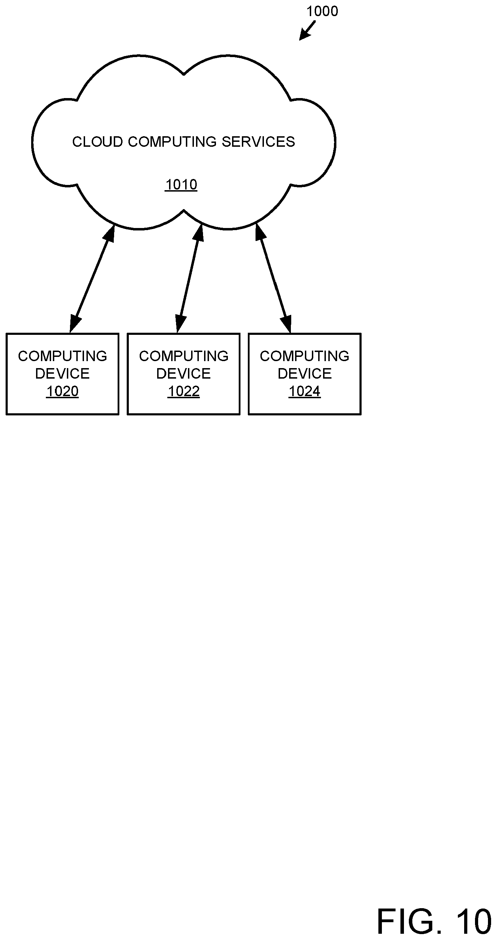

FIG. 10 depicts an example cloud computing environment 1000 in which the described technologies can be implemented, including, e.g., the system 100 of FIG. 1 and other systems herein. The cloud computing environment 1000 comprises cloud computing services 1010. The cloud computing services 1010 can comprise various types of cloud computing resources, such as computer servers, data storage repositories, networking resources, etc. The cloud computing services 1010 can be centrally located (e.g., provided by a data center of a business or organization) or distributed (e.g., provided by various computing resources located at different locations, such as different data centers and/or located in different cities or countries).

The cloud computing services 1010 are utilized by various types of computing devices (e.g., client computing devices), such as computing devices 1020, 1022, and 1024. For example, the computing devices (e.g., 1020, 1022, and 1024) can be computers (e.g., desktop or laptop computers), mobile devices (e.g., tablet computers or smart phones), or other types of computing devices. For example, the computing devices (e.g., 1020, 1022, and 1024) can utilize the cloud computing services 1010 to perform computing operations (e.g., data processing, data storage, and the like).

In practice, cloud-based, on-premises-based, or hybrid scenarios can be supported.

### Example 24 - Example Implementations

Although the operations of some of the disclosed methods are described in a particular, sequential order for convenient presentation, such manner of description encompasses rearrangement, unless a particular ordering is required by specific language set forth herein. For example, operations described sequentially can in some cases be rearranged or performed concurrently.

### Example 25 - Example Alternatives

The technologies from any example can be combined with the technologies described in any one or more of the other examples. In view of the many possible embodiments to which the principles of the disclosed technology can be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computer-implemented method (200) comprising:
recording (220) a plurality of database queries (11A) anticipated to be run on a relational database management system (110);
after an upgrade to the relational database management system (110) that invalidates a plurality of query execution plans (230), replaying (240) the plurality of database queries anticipated to be run on the relational database management system (110); and
rolling (250) back the plurality of database queries without committing.

2. The method of claim 1, wherein:
replaying the plurality of database queries comprises generating a query execution plan for at least one of the database queries;
wherein
a former query execution plan for at least one of the database queries may have been invalidated during the upgrade to the relational database management system (110).

3. The method of claim 1 or 2, further comprising:
iterating the replaying and rolling back over a plurality of tenants of a cloud-based environment hosting the relational database management system (110); wherein:
at least one query of the queries may be a parameterized query (360); and
replaying the at least one query may further comprise using tenant-agnostic parameters for the parameterized query (360).

4. The method of any one of the preceding claims, wherein:
recording the plurality of database queries comprises:
executing (430) an executable query-containing application artifact; and
recording (440) raised database queries raised during execution of the executable query-containing application artifact.

5. The method of claim 4, wherein:
the executable query-containing application artifact comprises an HTTP-based user interface support query.

6. The method of claim 4 or 5, wherein:
recording the plurality of database queries comprises:
executing the executable query-containing application artifact under a fake user identifier.

7. The method of any one of claims 4 to 6, wherein:
the executable query-containing application artifact comprises an executable test action sequence comprising a plurality of test actions testing program correctness or application performance; and
recording the database queries comprises recording the database queries raised during execution of the test actions.

8. The method of claim 7, wherein:
the executable test action sequence comprises a scenario test (560) or a unit test (550) for an application; and/or
the executable test action sequence is maintained as part of a development process for an application accessing the relational database management system (110) and tests the application.

9. The method of any one of the preceding claims, further comprising:
incorporating the database queries as configuration information into an upgrade package applying the upgrade.

10. The method of any one of the preceding claims, further comprising:
before replaying the database queries, converting the recorded database queries to tenant-agnostic form, wherein converting the recorded database queries to tenant-agnostic form comprises removing tenant-specific data from the recorded database queries.

11. A computing system comprising:
at least one hardware processor;
at least one memory coupled to the at least one hardware processor;
a relational database management system (110) comprising a plurality of stored database tables and a query execution plan cache (150);
a stored internal representation of a relational database management system (110) application upgrade (105) of an application, wherein the stored internal representation (105) comprises configuration information comprising one or more warmup database queries;
a query preparation tool (120) configured to execute the one or more warmup database queries and rollback the one or more warmup database queries, wherein executing the one or more warmup database queries generates at least one query execution plan in the query execution plan cache (150).

12. The computing system of claim 11, wherein:
the query preparation tool (120) is configured to execute the warmup database queries under a fake user identifier; and/or
the warmup database queries are recorded from execution of executable test action sequences for the application.

13. The computing system of claim 11 or 12, wherein the computing system further comprises:
a record tool (340) configured to record the warmup database queries, wherein the warmup database queries are raised during execution of a unit test (550) or a scenario test (560).

14. The computing system of any one of claims 11 to 13, wherein:
the query preparation tool (120) executes the warmup database queries in an active phase outside of a downtime window; and/or
the query preparation tool (120) iterates (840) over a plurality of tenants for which the application is active.

15. One or more non-transitory computer-readable media comprising computer-executable instructions that, when executed by a computing system, cause the computing system to perform operations comprising:
executing (660) OData queries supporting user interfaces of an application;
recording (680) SQL database queries resulting from execution of the OData queries;
executing (760) scenario tests (560) for the application;
recording (770) SQL database queries resulting from execution of the scenario tests (560); and
after invalidation of query execution plan cache (150) of a relational database management system (110), replaying (800) the recorded SQL database queries from execution of the OData queries and the recorded SQL database queries from execution of the scenario tests;
wherein replaying the recorded SQL database queries from execution of the OData queries and the recorded SQL database queries from execution of the scenario tests adds (870) at least one query execution plan to the query execution plan cache (150).

## Amended claims

### Amended claims in accordance with Rule 137(2) EPC.

1. A computer-implemented method (200) comprising:
recording (220) a plurality of database queries (11A) anticipated to be run on a relational database management system (110), wherein the database queries are warmup queries, wherein the warmup queries are part of the configuration information of an upgrade to the relational database management system (110) that invalidates a plurality of query execution plans (230);
after the upgrade to the relational database management system (110), replaying (240) the plurality of database queries anticipated to be run on the relational database management system (110), comprising generating a query execution plan for at least one of the database queries, wherein
a former query execution plan for at least one of the database queries is invalidated during the upgrade to the relational database management system (110); and
before actual user queries are received, rolling (250) back the plurality of database queries without committing.

2. The method of claim 1, further comprising:
iterating the replaying and rolling back over a plurality of tenants of a cloudbased environment hosting the relational database management system (110); wherein:
at least one query of the queries may be a parameterized query (360); and replaying the at least one query may further comprise using tenant-agnostic parameters for the parameterized query (360).

3. The method of claim 1 or 2, wherein:
recording the plurality of database queries comprises:
executing (430) an executable query-containing application artifact; and
recording (440) raised database queries raised during execution of the executable query-containing application artifact.

4. The method of claim 3, wherein:
the executable query-containing application artifact comprises an HTTP-based user interface support query.

5. The method of claim 3 or 4, wherein:
recording the plurality of database queries comprises:
executing the executable query-containing application artifact under a fake user identifier.

6. The method of any one of claims 3 to 5, wherein:
the executable query-containing application artifact comprises an executable test action sequence comprising a plurality of test actions testing program correctness or application performance; and
recording the database queries comprises recording the database queries raised during execution of the test actions.

7. The method of claim 6, wherein:
the executable test action sequence comprises a scenario test (560) or a unit test (550) for an application; and/or
the executable test action sequence is maintained as part of a development process for an application accessing the relational database management system (110) and tests the application.

8. The method of any one of the preceding claims, further comprising:
incorporating the database queries as configuration information into an upgrade package applying the upgrade.

9. The method of any one of the preceding claims, further comprising:
before replaying the database queries, converting the recorded database queries to tenant-agnostic form, wherein converting the recorded database queries to tenant-agnostic form comprises removing tenant-specific data from the recorded database queries.

10. A computing system comprising:
at least one hardware processor;
at least one memory coupled to the at least one hardware processor;
a relational database management system (110) comprising a plurality of stored database tables and a query execution plan cache (150);
a stored internal representation of a relational database management system (110) application upgrade (105) of an application, wherein the stored internal representation (105) comprises configuration information comprising one or more warmup database queries, wherein the application upgrade invalidates a plurality of query execution plans (230) including a former query execution plan for at least one of the warmup database queries;
a query preparation tool (120) configured to execute the one or more warmup database queries and rollback the one or more warmup database queries after the application upgrade (105) of the application and before actual user queries are received,
wherein executing the one or more warmup database queries generates at least one query execution plan in the query execution plan cache (150).

11. The computing system of claim 10, wherein:
the query preparation tool (120) is configured to execute the warmup database queries under a fake user identifier; and/or
the warmup database queries are recorded from execution of executable test action sequences for the application.

12. The computing system of claim 10 or 11, wherein the computing system further comprises:
a record tool (340) configured to record the warmup database queries, wherein the warmup database queries are raised during execution of a unit test (550) or a scenario test (560).

13. The computing system of any one of claims 10 to 12, wherein:
the query preparation tool (120) executes the warmup database queries in an active phase outside of a downtime window; and/or
the query preparation tool (120) iterates (840) over a plurality of tenants for which the application is active.

14. One or more non-transitory computer-readable media comprising computer-executable instructions that, when executed by a computing system, cause the computing system to perform operations comprising:
executing (660) OData queries supporting user interfaces of an application;
recording (680) SQL database queries resulting from execution of the OData queries in a warmup configuration file;
executing (760) scenario tests (560) for the application;
recording (770) SQL database queries resulting from execution of the scenario tests (560) in the warmup configuration file; and
after invalidation of query execution plan cache (150) of a relational database management system (110) and before receiving actual user queries,
replaying (800) the recorded SQL database queries from execution of the OData queries and the recorded SQL database queries from execution of the scenario tests using the warmup configuration file;
wherein replaying the recorded SQL database queries from execution of the OData queries and the recorded SQL database queries from execution of the scenario tests adds (870) at least one query execution plan to the query execution plan cache (150);
when a subsequent query is received that matches a query execution plan in the query execution plan cache, reusing the query execution plan.
